Europäisches Patentamt

European Patent Office

Office européen des brevets

(11) Numéro de publication: **0 337 854**
**A1**

## (12) DEMANDE DE BREVET EUROPEEN

(21) Numéro de dépôt: **89400936.4**

(22) Date de dépôt: **05.04.89**

(51) Int. Cl.⁴: **F 01 N 7/18**
F 16 L 27/06

(30) Priorité: **12.04.88 FR 8804813**

(43) Date de publication de la demande:
**18.10.89 Bulletin 89/42**

(84) Etats contractants désignés: **DE FR GB IT**

(71) Demandeur: **JACQUES DUBOIS**
**82 rue A. Badin**
**F-76360 Barentin (FR)**

(72) Inventeur: **Brandener, Louis**
**80 avenue F. Lefebvre**
**F-78300 Poissy (FR)**

(74) Mandataire: **Fruchard, Guy et al**
**CABINET BOETTCHER 23, rue la Boétie**
**F-75008 Paris (FR)**

(54) Accouplement d'échappement flexible.

(57) Accouplement d'échappement flexible comprenant un premier tronçon de tube 1 terminé par une partie d'appui sphérique convexe, une première bride d'assemblage 2 associée au premier tronçon de tube, un second tronçon de tube 7 terminé par une partie d'appui sphérique concave venant en regard de la partie d'appui sphérique convexe du premier tronçon de tube, une seconde bride d'assemblage 6 associée au second tronçon de tube et des moyens de serrage 10 disposés pour solliciter les brides d'assemblage l'une vers l'autre en liaison avec des organes d'appui 11. L'accouplement d'échappement comporte également des organes d'amortissement de vibrations 15 disposés entre au moins l'une des brides d'assemblage et les moyens de serrage correspondants.

FIG_1

EP 0 337 854 A1

**Description**

**Accouplement d'échappement flexible.**

La présente invention concerne un accouplement d'échappement à rotule entre deux tronçons de tube d'échappement.

On sait que lors du montage d'une voiture, et plus particulièrement d'une voiture à moteur transversal, il est nécessaire de prévoir un accouplement flexible entre le collecteur d'échappement, fixé au moteur, et le tuyau d'échappement, fixé à la carrosserie et supportant le pot d'échappement.

Afin d'absorber les mouvements relatifs entre le collecteur et le tuyau d'échappement, et afin d'assurer l'étanchéité, l'un des tronçons de tube est terminé par une portée sphérique convexe, réalisée à l'extrémité du tube lui-même ou formée par un joint annulaire, qui coopère avec une surface complémentaire de l'autre tronçon de tube d'échappement. Afin de maintenir les pièces assemblées, le collecteur d'échappement et le tuyau d'échappement comportent dans ce cas des brides d'assemblage associées à chacun des tronçons de tube et reliées l'une à l'autre par des boulons autour desquels sont montés des ressorts d'appui afin d'assurer l'étanchéité de l'accouplement.

Lors des mouvements relatifs des deux tronçons de tube d'échappement, les deux surfaces sphériques frottent l'une contre l'autre et engendrent des vibrations extrêmement désagréables. On a déjà réussi à diminuer le niveau de ces vibrations en prévoyant un joint de structure particulière entre les extrémités en regard des tronçons de tube d'échappement. Toutefois, on n'a pas réussi à ce jour à supprimer totalement les vibrations engendrées par le frottement des différentes pièces de l'accouplement lors de l'utilisation.

La formation de vibrations ne pouvant pas être totalement supprimée, un but de l'invention est de minimiser les effets de ces vibrations.

En vue de la réalisation de ce but, on prévoit selon l'invention un accouplement d'échappement flexible comprenant un premier tronçon de tube terminé par une partie d'appui sphérique convexe, une première bride d'assemblage associée au premier tronçon de tube, un second tronçon de tube terminé par une partie d'appui sphérique concave venant en regard de la partie d'appui sphérique convexe du premier tronçon de tube, une seconde bride d'assemblage associée au second tronçon de tube, et des moyens de serrage disposés pour solliciter les brides d'assemblage l'une vers l'autre en liaison avec des organes d'appui, dans lequel des organes d'amortissement de vibrations sont disposés entre au moins l'une des brides d'assemblage et les moyens de serrage correspondants.

On a constaté que l'on supprimait ainsi totalement les vibrations dans la gamme des fréquences sonores, partiellement en raison du fait que les organes d'amortissement de vibrations empêchent une mise en résonance des brides d'assemblage auxquelles ils sont associés et partiellement en raison du fait qu'ils constituent un isolant vibratoire entre les brides d'assemblage et les moyens de serrage et évitent donc que ces derniers n'entrent euxmêmes en vibration.

Selon un aspect avantageux de l'invention, les organes d'amortissement de vibration comprennent des tampons en fibres élastiques, de préférence des tampons réalisés à partir d'un tricot de fil d'acier comprimé ayant une densité comprise entre 1,5 et 3. On a constaté que les frottements secs développés entre les fibres et plus particulièrement entre les mailles du tricot de fil d'acier dissipent de façon très importante l'énergie des vibrations engendrées aux extrémités de la bride et détruisent presque totalement la capacité de la bride d'entrer en résonance.

D'autres caractéristiques et avantages de l'invention apparaîtront encore à la lecture de la description qui suit de plusieurs exemples de réalisation non limitatifs de l'invention en liaison avec les dessins ci-joints parmi lesquels :

- la figure 1 est une vue en coupe axiale d'un premier mode de réalisation d'accouplement d'échappement selon l'invention,
- la figure 2 est une vue en coupe axiale d'un second mode de réalisation d'accouplement d'échappement selon l'invention,
- la figure 3 est une vue en coupe axiale d'un troisième mode de réalisation d'accouplement d'échappement selon l'invention,
- la figure 4 est une vue en coupe axiale d'un quatrième mode de réalisation d'accouplement d'échappement selon l'invention,
- la figure 5 est une vue en coupe axiale d'un cinquième mode de réalisation d'accouplement d'échappement selon l'invention.

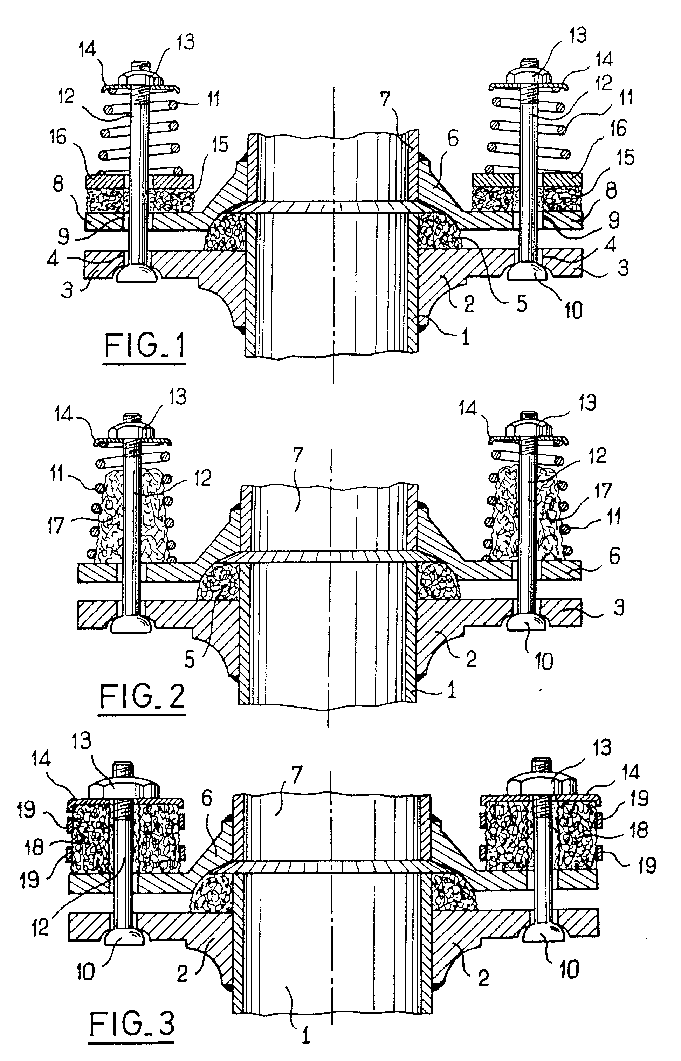

En référence à la figure 1, l'accouplement d'échappement flexible selon l'invention comprend un premier tronçon de tube 1 sur lequel est fixée, par exemple par soudage, une première bride d'assemblage 2 comportant, d'une façon connue en soi, des ailes 3 ayant des perçages 4. Un joint annulaire 5 est monté à l'extrémité du premier tronçon de tube 1 et s'appuie par une de ses faces sur la première bride d'assemblage 2. Le joint annulaire 5 comporte une surface d'appui externe sphérique convexe sur laquelle prend appui une surface d'appui sphérique concave disposée en regard de la partie d'appui sphérique convexe et portée par une seconde bride d'assemblage 6 fixée à l'extrémité d'un second tronçon de tube d'échappement 7. La seconde bride d'assemblage 6 comporte des ailes 8 munies de perçages 9.

Des moyens de serrage formés par des boulons 10 passant à travers les ouvertures 4 et 9 sont disposés pour solliciter les brides d'assemblage 2 et 6 l'une vers l'autre en liaison avec des organes d'appui formés par des ressorts hélicoïdaux 11 disposés autour d'une partie de la tige 12 des boulons 10 s'étendant du côté de la seconde bride d'assemblage 6. La compression des ressorts 11 assurant une force d'appui suffisante entre les surfaces sphériques est obtenue au moyen d'un écrou 13 prenant appui sur une coupelle 14.

Dans ce premier mode de réalisation de l'invention, l'accouplement comporte des organes d'amortissement de vibrations en forme de tampons annulaires 15 disposés entre une extrémité des ressorts hélicoïdaux 11 et la bride d'assemblage correspondante 6. Les tampons annulaires 15 sont de préférence réalisés en tricot de fil d'acier. Les tampons annulaires 15 sont par exemple obtenus en réalisant un tricot tubulaire à partir d'un fil d'acier ayant un diamètre de 0,1 à 0,3 mm et une résistance à la rupture de 100 daN/mm² ou plus, puis en enroulant le tricot tubulaire mis à plat selon une préforme cylindrique qui est comprimée axialement de sorte que le tampon annulaire obtenu ait une densité au repos comprise entre 1,5 et 3, de préférence environ 2.

Afin d'éviter une pénétration des ressorts 11 dans les tampons annulaires 15 lors de l'utilisation, une rondelle métallique 16 est de préférence disposée entre l'extrémité des ressorts 11 et des tampons annulaires 15.

Lors de l'utilisation, les écrous 13 sont serrés jusqu'à ce que la force d'appui souhaitée entre les brides d'assemblage soit obtenue , généralement de l'ordre de 50 Kg. Dans ces conditions, les tampons annulaires 15 sont légèrement comprimés par rapport à leur position de repos mais gardent une élasticité et l'expérience a montré qu'ils assurent alors un amortissement très important des vibrations créées dans la seconde bride 6 par le frottement entre les surfaces d'appui sphériques. L'accouplement ainsi réalisé peut fonctionner pendant de nombreuses heures sans engendrer de sons gênants pour l'utilisateur du véhicule sur lequel l'accouplement est monté.

La figure 2 illustre un second mode de réalisation dans lequel l'accouplement a une structure générale identique à celle du mode de réalisation de la figure 1. Toutefois, dans ce mode de réalisation, les tampons annulaires 15 sont remplacés par des manchons d'amortissement des vibrations 17 également réalisés de préférence en fibres élastiques, soit à partir d'un tricot de fil d'acier tel que décrit précédemment, soit encore à partir de fibres non tissées enchevêtrées les unes dans les autres et éventuellement légèrement comprimées pour assurer leur cohésion. Le manchon 17 est disposé autour de la tige 12 du boulon 10 et est en contact avec les spires des ressorts hélicoïdaux 11. Bien que dans le mode de réalisation illustré le manchon 17 ait une hauteur inférieure à la distance entre les ailes 8 de la seconde bride d'assemblage 6 et les coupelles 14, on peut prévoir des manchons 17 ayant au repos une hauteur égale à cette distance ou même une hauteur légèrement supérieure de sorte que le manchon 17 se trouve légèrement comprimé de façon complémentaire lors du serrage de l'écrou 13. De même, bien que sur le mode de réalisation illustré les manchons d'amortissement de vibrations 17 soient disposés à l'intérieur des ressorts hélicoïdaux 11, on peut réaliser un accouplement dans lequel les manchons 17 débordent vers l'extérieur des ressorts hélicoïdaux ou sont même totalement disposés à l'extérieur des ressorts 11.

La figure 3 illustre un troisième mode de réalisation dans lequel les ressorts hélicoïdaux 11 ont été supprimés et sont remplacés par des manchons tubulaires 18 qui assurent à la fois la fonction d'organe d'appui des ressorts hélicoïdaux 11 et la fonction d'organe d'amortissement des vibrations. Dans ce mode de réalisation, les manchons 18 sont de préférence réalisés à partir d'un tricot de fil d'acier comme indiqué précédemment. A titre indicatif, pour des boulons ayant un diamètre de 8 mm, une préforme cylindrique a été réalisée à partir d'un morceau de bande de tricot tubulaire d'une largeur d'environ 70 mm et d'une longueur d'environ 20 cm roulée sur elle-même pour former une préforme cylindrique qui a été comprimée axialement jusqu'à ce que sa hauteur au repos soit d'environ 25 mm. Pour assurer une cohésion suffisante du manchon, on prévoit de préférence autour de celui-ci des moyens de maintien tels que des bagues 19, des agrafes ou une résille tubulaire formée à partir d'un fil identique à celui du tricot métallique ou d'un fil plus mou que celui du tricot métallique.

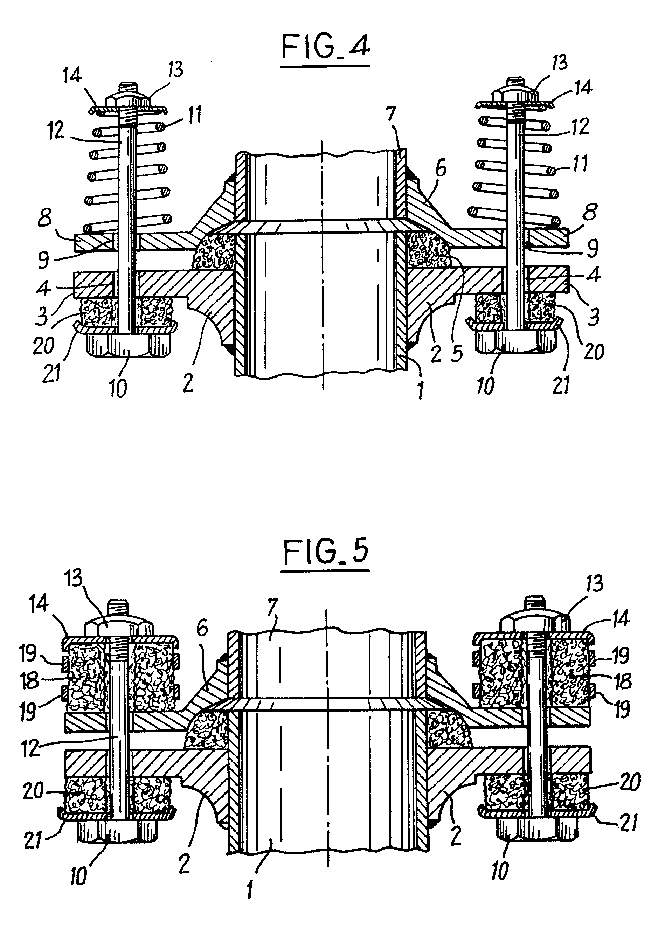

La figure 4 illustre un quatrième mode de réalisation ayant une structure voisine de celle du mode de réalisation de la figure 1. Toutefois, dans ce quatrième mode de réalisation les tampons annulaires 15 ont été supprimés et remplacés par des tampons annulaires 20 analogues aux tampons annulaires 15 mais disposés entre l'extrémité du boulon 10 adjacente à la bride d'assemblage 2 et cette bride d'assemblage. De préférence, les boulons 10 sont centrés sur les tampons annulaires 20 au moyen d'une coupelle 21.

Ainsi, les ressorts 11 sont montés entre une extrémité des boulons 10 et la bride d'assemblage 6 adjacente tandis que les organes d'amortissement 20 sont montés entre une extrémité opposée du boulon et la bride d'assemblage 2 adjacente. On a ainsi un découplage total des boulons 10 par rapport aux brides d'assemblage et ce mode de réalisation s'est avéré être celui qui donnait la meilleure réduction des bruits audibles lors des essais sur banc.

La figure 5 illustre un cinquième mode de réalisation analogue au mode de réalisation de la figure 3 mais comportant en outre des tampons annulaires 20 sur le côté opposé de l'assemblage de brides. De même que dans le quatrième mode de réalisation, les boulons 10 sont de préférence centrés par des coupelles 21 qui évitent en outre une pénétration de la tête du boulon dans les tampons annulaires 21.

Bien entendu l'invention n'est pas limitée aux modes de réalisation décrits et on peut y apporter des variantes de réalisation sans sortir du cadre de l'invention. En particulier, dans le cas de la figure 1, bien que les ressorts hélicoïdaux 11 aient été mis du côté de la seconde bride d'assemblage 6, on peut prévoir de les disposer du côté de la première bride d'assemblage. Bien entendu, les boulons 10 illustrés peuvent également être remplacés par des goujons fixés à l'une des brides d'assemblage ou même par des vis fixées dans un trou taraudé d'une bride d'assemblage.

Bien que dans les modes de réalisation illustrés la surface sphérique concave soit portée par la seconde bride d'assemblage, on peut également réaliser un second tronçon de tube d'assemblage s'évasant à son extrémité pour former la surface sphérique concave, la seconde bride d'assemblage étant alors montée en retrait sur le second tronçon de tube d'échappement et fixée à celui-ci par une soudure ou un sertissage ou même montée flottante sur le second tronçon de tube d'échappement.

Bien que dans les modes de réalisation illustrés la surface terminale convexe du premier tronçon de tube soit portée par un joint annulaire 5 séparé du tronçon de tube, on peut prévoir une surface terminale convexe directement formée à l'extrémité du tronçon de tube ou portée par un anneau métallique fixé à l'extrémité du tronçon de tube, et associée à un second tronçon de tube ayant une surface terminale sphérique convexe

Bien que dans les modes de réalisation illustrés les tampons d'amortissement des vibrations soient en contact direct avec la bride, on peut prévoir une rondelle ayant une ouverture centrale réduite disposée entre l'extrémité du tampon et la bride afin d'éviter une pénétration du tampon dans les ouvertures 9 de la bride en particulier lorsque ces ouvertures sont largement dimensionnées afin de permettre un débattement de la bride lors des mouvements des tronçons de tube l'un par rapport à l'autre.

**Revendications**

1. Accouplement d'échappement flexible comprenant un premier tronçon de tube (1) terminé par une partie d'appui sphérique convexe, une première bride d'assemblage (2) associée au premier tronçon de tube, un second tronçon de tube (7) terminé par une partie d'appui sphérique concave venant en regard de la partie d'appui sphérique convexe du premier tronçon de tube, une seconde bride d'assemblage (6) associée au second tronçon de tube et des moyens de serrage (10) disposés pour solliciter les brides d'assemblage l'une vers l'autre en liaison avec des organes d'appui (11), caractérisé en ce qu'il comporte des organes d'amortissement de vibrations (15,17,18,20) disposés entre au moins l'une des brides d'assemblage et les moyens de serrage correspondants.

2. Accouplement d'échappement selon la revendication 1, caractérisé en ce que les organes d'amortissement de vibrations comprennent des tampons en fibres élastiques.

3. Accouplement d'échappement selon la revendication 2, caractérisé en ce que les organes d'amortissement comprennent un tricot de fil d'acier comprimé.

4. Accouplement d'échappement selon la revendication 3, caractérisé en ce que le tricot de fil d'acier a une densité comprise entre 1,5 et 3.

5. Accouplement d'échappement selon l'une des revendications 1 à 4 dans lequel les organes d'appui sont des ressorts (11), caractérisé en ce que les organes d'amortissement sont des tampons annulaires (15) disposés entre une extrémité des ressorts et la bride d'assemblage correspondante.

6. Accouplement d'échappement selon l'une des revendications 1 à 4 dans lequel les organes d'appui sont des ressorts hélicoïdaux (11), caractérisé en ce que les organes d'amortissement sont des tampons en forme de manchons (17) en contact avec les spires des ressorts.

7. Accouplement d'échappement selon l'une des revendications 1 à 4, dans lequel les moyens de serrage comprennent des boulons (10), caractérisé en ce qu'il comporte des manchons élastiques (18) en tricot de fil d'acier comprimé disposés autour d'une tige (12) des boulons (10) et ayant une extrémité en appui sur la bride d'assemblage correspondante et une extrémité opposée en appui contre une partie extrême d'un boulon correspondant, ces manchons élastiques (18) faisant fonction à la fois d'organes d'appui et d'organes d'amortissement.

8. Accouplement d'échappement selon l'une des revendications 1 à 4 dans lequel les moyens de serrage comprennent des boulons traversant les brides d'assemblage, les organes d'appui (11,18) étant montés entre une extrémité d'un boulon et la bride d'assemblage (6) adjacente, caractérisé en ce que les organes d'amortissement de vibrations (20) sont montés entre une extrémité opposée du boulon et la bride d'assemblage (2) adjacente.

FIG_1

FIG_2

FIG_3

## FIG_4

## FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | DE-A-2829333 (METEX CORP.)<br>* page 15, dernier alinéa - page 18, alinéa 2; figure 2 *<br>---- | 1 | F01N7/18<br>F16L27/06 |
| A | DE-C-3317512 (BERGWERKSVERBAND)<br>* le document en entier *<br>--- | 1 | |
| A | DE-A-3618485 (WITZENMANN)<br>--- | | |
| A | EP-A-0250901 (IWK REGLER UND KOMPENSATOREN)<br>----- | | |

**DOMAINES TECHNIQUES RECHERCHES (Int. Cl.4 )**

F01N
F16L

Le présent rapport a été établi pour toutes les revendications

| Lieu de la recherche | Date d'achèvement de la recherche | Examinateur |
|---|---|---|
| LA HAYE | 18 JUILLET 1989 | FRIDEN C.M. |

EPO FORM 1503 03.82 (P0402)